# EUROPEAN PATENT APPLICATION

(11) **EP 4 575 118 A2**
(43) Date of publication of application: **25.06.2025**
(21) Application number: 25175700.1
(22) Date of filing: 25.11.2022
(51) Int. Cl.: E04B 2/74

(54) **A LEVELLING ASSEMBLY FOR A STORAGE AND RETRIEVAL SYSTEM**

(30) Priority: 03.12.2021 NO 20211460
(62) Divisional of application: 22822418.4
(71) Applicant: AutoStore Technology AS, 5578 Nedre Vats (NO)
(72) Inventor: AUSTRHEIM, Trond, 5578 Nedre Vats (NO)
(74) Representative: Kilburn & Strode LLP

(57) **Abstract**

The invention relates to a levelling assembly (10) for a storage and retrieval system (1) for storing goods holders (106). The assembly (10) comprises a threaded elongate member (12), a threaded nut (14) for engaging with the threaded elongate member (12) and a floor rail (16) for supporting upright members (102) of the storage and retrieval system (1). In a first state, the threaded elongate member (12) engages with the threaded nut (14) and is provided in a channel (20) of the floor rail (16) and rotationally immobilized relative the channel (20). In response to a rotational force applied on the threaded elongate member (12), the floor rail (16) is movable in vertical direction. The invention further relates to a method for taking up irregularities in a floor surface by means of the levelling assembly (10).

## Description

The present invention relates to a levelling assembly for a storage and retrieval system for storing goods holders and to a method for taking up irregularities in a floor surface by means of the levelling assembly.

### BACKGROUND AND PRIOR ART

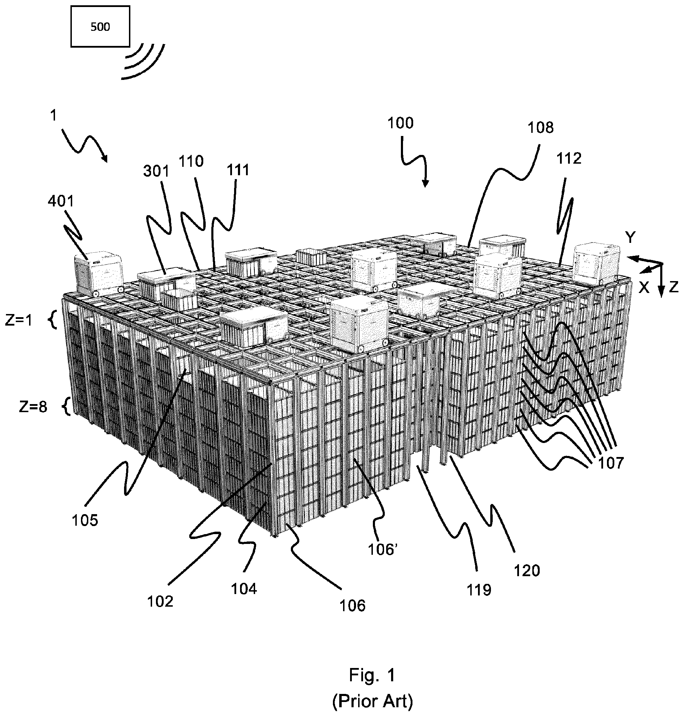

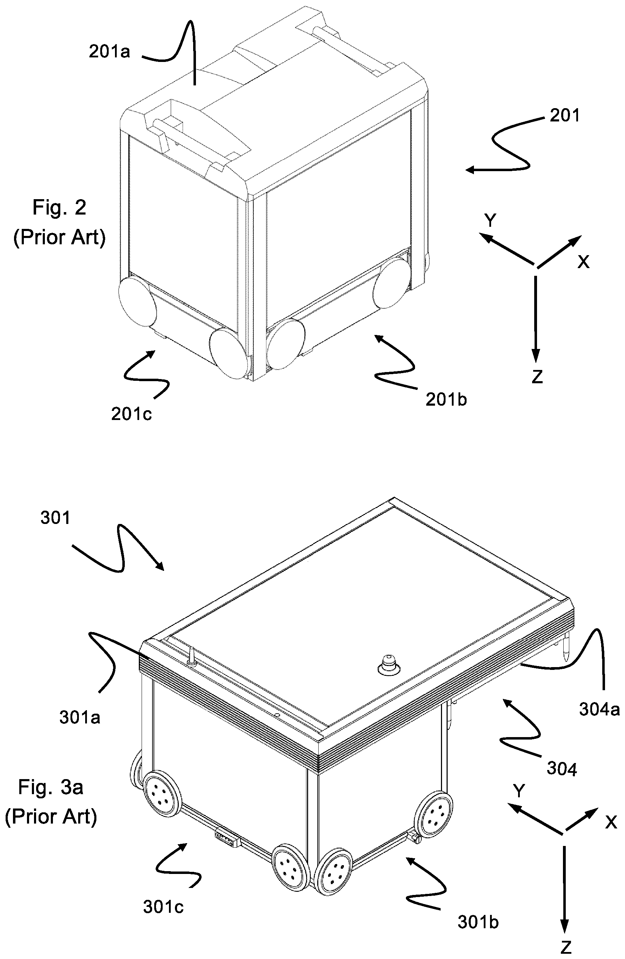

Fig. 1 discloses a prior art automated storage and retrieval system 1 with a framework structure 100 and Figs. 2, 3a-3b disclose three different prior art container handling vehicles 201, 301, 401 suitable for operating on such a system 1.

The framework structure 100 comprises upright members 102 and a storage volume comprising storage columns 105 arranged in rows between the upright members 102. In these storage columns 105 storage containers 106, also known as bins, are stacked one on top of one another to form container stacks 107. The members 102 may typically be made of metal, e.g. extruded aluminum profiles.

The framework structure 100 of the automated storage and retrieval system 1 comprises a rail system 108 arranged across the top of framework structure 100, on which rail system 108 a plurality of container handling vehicles 301, 401 may be operated to raise storage containers 106 from, and lower storage containers 106 into, the storage columns 105, and also to transport the storage containers 106 above the storage columns 105. The rail system 108 comprises a first set of parallel rails 110 arranged to guide movement of the container handling vehicles 301, 401 in a first direction X across the top of the frame structure 100, and a second set of parallel rails 111 arranged perpendicular to the first set of rails 110 to guide movement of the container handling vehicles 301, 401 in a second direction *Y* which is perpendicular to the first direction X. Containers 106 stored in the columns 105 are accessed by the container handling vehicles 301, 401 through access openings 112 in the rail system 108. The container handling vehicles 301, 401 can move laterally above the storage columns 105, i.e. in a plane which is parallel to the horizontal *X-Y* plane.

The upright members 102 of the framework structure 100 may be used to guide the storage containers during raising of the containers out from and lowering of the containers into the columns 105. The stacks 107 of containers 106 are typically self-supportive.

Each prior art container handling vehicle 201, 301, 401 comprises a vehicle body 201a, 301a, 401a and first and second sets of wheels 201b, 201c, 301b, 301c, 401b, 401c which enable lateral movement of the container handling vehicles 201, 301, 401 in the *X* direction and in the *Y* direction, respectively. In Figs. 2-3b, two wheels in each set are fully visible. The first set of wheels 201b, 301b, 401b is arranged to engage with two adjacent rails of the first set 110 of rails, and the second set of wheels 201c, 301c, 401c is arranged to engage with two adjacent rails of the second set 111 of rails. At least one of the sets of wheels 201b, 201c, 301b, 301c, 401b, 401c can be lifted and lowered, so that the first set of wheels 201b, 301b, 401b and/or the second set of wheels 201c, 301c, 401c can be engaged with the respective set of rails 110, 111 at any one time.

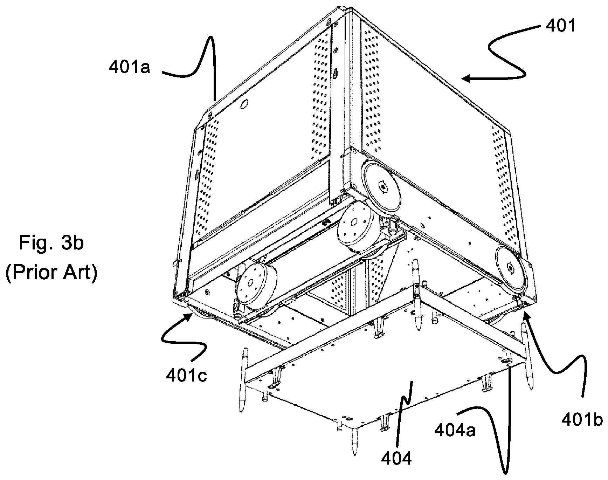

Each prior art container handling vehicle 201, 301, 401 also comprises a lifting device 304, 404 (visible in Figs. 3a-3b) having a lifting frame part 304a, 404a for vertical transportation of storage containers 106, e.g. raising a storage container 106 from, and lowering a storage container 106 into, a storage column 105. The lifting device 304, 404 comprises one or more gripping/engaging devices which are adapted to engage a storage container 106, and which gripping/engaging devices can be lowered from the vehicle 201, 301, 401 so that the position of the gripping/engaging devices with respect to the vehicle 201, 301, 401 can be adjusted in a third direction *Z* (visible for instance in Fig. 1) which is orthogonal the first direction *X* and the second direction *Y.* Parts of the gripping device of the container handling vehicles 301, 401 are shown in Figs. 3a and 3b indicated with reference number. The gripping device of the container handling device 201 is located within the vehicle body 201a in Fig. 2.

Conventionally, and also for the purpose of this application, *Z*=1 identifies the uppermost layer available for storage containers below the rails 110, 111, i.e. the layer immediately below the rail system 108, *Z*=2 the second layer below the rail system 108, *Z*=3 the third layer etc. In the exemplary prior art disclosed in Fig. 1, *Z*=8 identifies the lowermost, bottom layer of storage containers. Similarly, *X*=1*...n* and *Y=*1*...n* identifies the position of each storage column 105 in the horizontal plane. Consequently, as an example, and using the Cartesian coordinate system *X*, *Y, Z* indicated in Fig. 1, the storage container identified as 106' in Fig. 1 can be said to occupy storage position *X=18, Y=1, Z*=6. The container handling vehicles 201, 301, 401 can be said to travel in layer *Z*=0, and each storage column 105 can be identified by its *X* and *Y* coordinates. Thus, the storage containers shown in Fig. 1 extending above the rail system 108 are also said to be arranged in layer *Z*=0.

The storage volume of the framework structure 100 has often been referred to as a grid 104, where the possible storage positions within this grid are referred to as storage cells. Each storage column may be identified by a position in an X- and Y-direction, while each storage cell may be identified by a container number in the X-, Y- and Z-direction.

Each prior art container handling vehicle 201, 301, 401 comprises a storage compartment or space for receiving and stowing a storage container 106 when transporting the storage container 106 across the rail system 108. The storage space may comprise a cavity arranged internally within the vehicle body 201a as shown in Figs. 2 and 3b and as described in e.g. WO2015/193278A1 and WO2019/206487A1, the contents of which are incorporated herein by reference.

Fig. 3a shows an alternative configuration of a container handling vehicle 301 with a cantilever construction. Such a vehicle is described in detail in e.g. NO317366, the contents of which are also incorporated herein by reference.

The cavity container handling vehicles 201 shown in Fig. 2 may have a footprint that covers an area with dimensions in the X and Y directions which is generally equal to the lateral extent of a storage column 105, e.g. as is described in WO2015/193278A1, the contents of which are incorporated herein by reference. The term 'lateral' used herein may mean 'horizontal'.

Alternatively, the cavity container handling vehicles 401 may have a footprint which is larger than the lateral area defined by a storage column 105 as shown in Fig. 3b and as disclosed in WO2014/090684A1 or WO2019/206487A1.

The rail system 108 typically comprises rails with grooves in which the wheels of the vehicles run. Alternatively, the rails may comprise upwardly protruding elements, where the wheels of the vehicles comprise flanges to prevent derailing. These grooves and upwardly protruding elements are collectively known as tracks. Each rail may comprise one track, or each rail may comprise two parallel tracks; in other rail systems 108, each rail in one direction may comprise one track and each rail in the other perpendicular direction may comprise two tracks. The rail system may also comprise a double track rail in one of the X or Y direction and a single track rail in the other of the X or Y direction. A double track rail may comprise two rail members, each with a track, which are fastened together.

WO2018/146304A1, the contents of which are incorporated herein by reference, illustrates a typical configuration of rail system 108 comprising rails and parallel tracks in both *X* and *Y* directions.

In the framework structure 100, a majority of the columns 105 are storage columns 105, i.e. columns 105 where storage containers 106 are stored in stacks 107. However, some columns 105 may have other purposes. In Fig. 1, columns 119 and 120 are such special-purpose columns used by the container handling vehicles 201, 301, 401 to drop off and/or pick up storage containers 106 so that they can be transported to an access station (not shown) where the storage containers 106 can be accessed from outside of the framework structure 100 or transferred out of or into the framework structure 100. Within the art, such a location is normally referred to as a 'port' and the column in which the port is located may be referred to as a 'port column' 119,120. The transportation to the access station may be in any direction, that is horizontal, tilted and/or vertical. For example, the storage containers 106 may be placed in a random or a dedicated column 105 within the framework structure 100, then picked up by any container handling vehicle and transported to a port column 119, 120 for further transportation to an access station. The transportation from the port to the access station may require movement along various different directions, by means such as delivery vehicles, trolleys or other transportation lines. Note that the term 'tilted' means transportation of storage containers 106 having a general transportation orientation somewhere between horizontal and vertical.

In Fig. 1, the first port column 119 may for example be a dedicated drop-off port column where the container handling vehicles 201, 301 can drop off storage containers 106 to be transported to an access or a transfer station, and the second port column 120 may be a dedicated pick-up port column where the container handling vehicles 201, 301, 401 can pick up storage containers 106 that have been transported from an access or a transfer station.

The access station may typically be a picking or a stocking station where product items are removed from or positioned into the storage containers 106. In a picking or a stocking station, the storage containers 106 are normally not removed from the automated storage and retrieval system 1, but are, once accessed, returned into the framework structure 100. A port can also be used for transferring storage containers to another storage facility (e.g. to another framework structure or to another automated storage and retrieval system), to a transport vehicle (e.g. a train or a lorry), or to a production facility.

A conveyor system comprising conveyors is normally employed to transport the storage containers between the port columns 119, 120 and the access station.

If the port columns 119, 120 and the access station are located at different heights, the conveyor system may comprise a lift device with a vertical component for transporting the storage containers 106 vertically between the port column 119, 120 and the access station.

The conveyor system may be arranged to transfer storage containers 106 between different framework structures, e.g. as is described in WO2014/075937A1, the contents of which are incorporated herein by reference.

When a storage container 106 stored in one of the columns 105 disclosed in Fig. 1 is to be accessed, one of the container handling vehicles 201, 301, 401 is instructed to retrieve the target storage container 106 from its position and transport it to the drop-off port column 119. This operation involves moving the container handling vehicle 201, 301 to a location above the storage column 105 in which the target storage container 106 is positioned, retrieving the storage container 106 from the storage column 105 using the container handling vehicle's 201, 301, 401 lifting device (not shown), and transporting the storage container 106 to the drop-off port column 119. If the target storage container 106 is located deep within a stack 107, i.e. with one or a plurality of other storage containers 106 positioned above the target storage container 106, the operation also involves temporarily moving the above-positioned storage containers prior to lifting the target storage container 106 from the storage column 105. This step, which is sometimes referred to as "digging" within the art, may be performed with the same container handling vehicle that is subsequently used for transporting the target storage container to the drop-off port column 119, or with one or a plurality of other cooperating container handling vehicles. Alternatively, or in addition, the automated storage and retrieval system 1 may have container handling vehicles 201, 301, 401 specifically dedicated to the task of temporarily removing storage containers 106 from a storage column 105. Once the target storage container 106 has been removed from the storage column 105, the temporarily removed storage containers 106 can be repositioned into the original storage column 105. However, the removed storage containers 106 may alternatively be relocated to other storage columns 105.

When a storage container 106 is to be stored in one of the columns 105, one of the container handling vehicles 201, 301, 401 is instructed to pick up the storage container 106 from the pick-up port column 120 and transport it to a location above the storage column 105 where it is to be stored. After storage containers 106 positioned at or above the target position within the stack 107 have been removed, the container handling vehicle 201, 301, 401 positions the storage container 106 at the desired position. The removed storage containers 106 may then be lowered back into the storage column 105 or relocated to other storage columns 105.

For monitoring and controlling the automated storage and retrieval system 1, e.g. monitoring and controlling the location of respective storage containers 106 within the framework structure 100, the content of each storage container 106 and the movement of the container handling vehicles 201, 301, 401 so that a desired storage container 106 can be delivered to the desired location at the desired time without the container handling vehicles 201, 301, 401 colliding with each other, the automated storage and retrieval system 1 comprises a control system 500 (shown in Fig. 1) which typically is computerized and which typically comprises a database for keeping track of the storage containers 106.

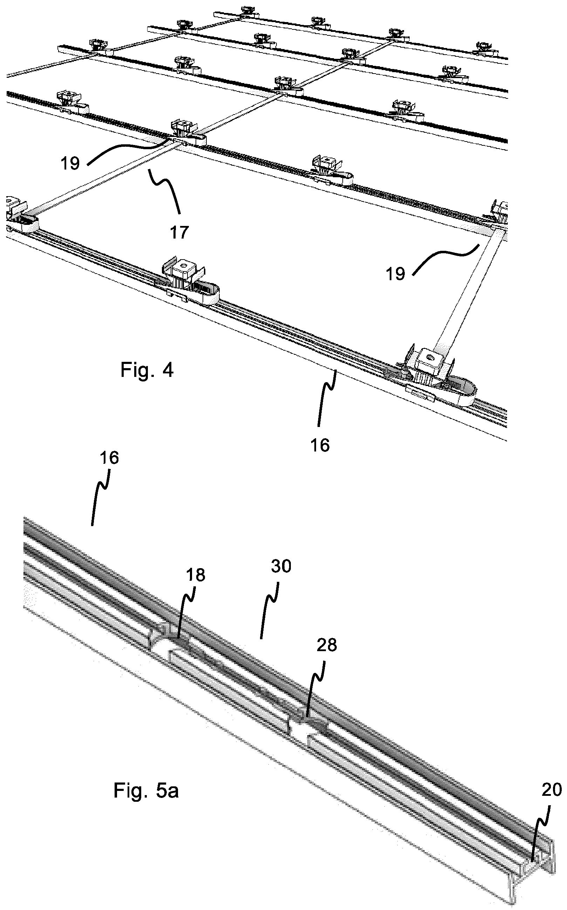

It is necessary for the above-described storage system to be even in the horizontal direction, at the floor level as well as at the top of framework structure level. This entails that the floor of the building should preferably be even since the horizontally extending floor rails (shown in Fig. 4) that support the storage system are positioned directly on the floor. A framework structure 100 of Fig. 1, comprising upright members 102, rests on these floor rails. The members 102 support an upper rail system 108.

Usually, floors of newly built facilities comply with the requirement that the floor needs to be even. However, when existing facilities are repurposed to house an automated storage and retrieval system, it is common that the floor of the facility has an irregular and/or sloping surface. In this context, lead time for installation of the system is normally limited. In consequence, the deficiencies of the floor are typically not remedied in connection with system installation. In a closely related context, there could be small discrepancies with respect to the length of the manufactured upright members 102 as well.

A known solution to this problem is described in WO2017/198784. More specifically, it is disclosed a leveling foot comprising a hollow column. A spring is arranged in the hollow column of the foot. A top piece engages the column and is movable in the vertical direction as a function of the spring force. In its other end, the top piece mates with the previously mentioned, upright member. The spring force causes top piece to extend so that any vertical gap at the upper rail system 108, caused either by a depression in the floor surface or by the member 102 being too short, is compensated for. Once the top piece is in the desired position, the foot is immobilized by bringing a wedge device into locking engagement with the hollow column. The solution proposed in WO2017/198784 performs adequately in situations involving smaller vertical gaps at the upper rail system.

Larger vertical gaps are typically addressed by manufacturing customized shims from sheet metal. These shims are subsequently inserted between the floor rail and the leveling foot where required. This process is relatively complex and time-consuming.

In a related context, in cases where the storage system to be supported is particularly heavy, a floor rail-based structure that is initially level may, due to the weight of the system, create depressions in the floor surface. In these situations, it is desirable to provide a leveling solution enabling continuous level adjustment in order to compensate for post-installation settling caused by the weight of the storage system.

In view of all of the above, it is desirable to provide a solution that solves or at least mitigates one or more of the aforementioned problems belonging to the prior art.

### SUMMARY OF THE INVENTION

The present invention is set forth and characterized in the independent claims, while the dependent claims describe other characteristics of the invention.

First aspect of the invention relates to a levelling assembly for a framework structure of a storage grid of a storage and retrieval system for storing goods holders, said framework structure being positioned on a floor surface. The levelling assembly comprises a threaded elongate member, a threaded nut for engaging with the threaded elongate member, a floor rail for supporting vertical members of the storage and retrieval system, wherein the floor rail is provided with a first aperture for mounting the threaded elongate member in a location on the floor rail where the member can extend through and be coupled to said floor rail, wherein the floor rail is provided with a channel for receiving the threaded nut and extending from the aperture in a longitudinal direction of the floor rail, wherein in a first state of the levelling assembly, the threaded elongate member is in contact with the floor surface and engages with the threaded nut that is received in the channel and rotationally immobilized relative said channel so that, in response to a rotational force applied on the threaded elongate member, the floor rail is movable in vertical direction.

By providing the levelling assembly as defined above, a simple and cost-efficient solution for taking up irregularities in the floor surface is obtained. This also means that no specific training is necessary for the workers assigned to this particular moment of the system installation. In addition, the proposed solution is well-suited in situations where a large amount of assembly units needs to be adjusted in a short time period. Here, the adjustment of the levelling assembly may be effected by means of conventional tools, such as a wrench, a screwdriver or a hex key.

In addition, use of interacting threaded elements permits fine adjustments of the levelling assembly, i.e. adjustments in very small increments. This is particularly useful in situations requiring continuous adjustment of the levelling assembly.

Moreover, the proposed solution may easily be implemented during installation of the storage and retrieval system. In a related context, the solution is compatible with the existing design of the storage and retrieval system for storing goods holders such that it is possible, subject to certain structural modifications, to retrofit the existing systems with the levelling assembly of the invention.

Second aspect of the invention relates to a method for taking up irregularities in a floor surface supporting a storage and retrieval system for storing goods holders by means of a levelling assembly in accordance with claim 13.

For the sake of brevity, advantages discussed above in connection with the levelling assembly may even be associated with the corresponding method and are not further discussed. Here, it is to be construed that the sequence of method steps of claim 13 may be effectuated in any given order.

For the purposes of this application, the term "container handling vehicle" used in "Background and Prior Art"-section of the application and the term "remotely operated vehicle" used in "Detailed Description of the Invention"-section both define a robotic wheeled vehicle operating on a rail system arranged across the top of the framework structure being part of an automated storage and retrieval system. Analogously, the term "storage container" used in "Background and Prior Art"-section of the application and the term "goods holder" used in "Detailed Description of the Invention"-section both define a receptacle for storing items. In this context, the goods holder can be a bin, a tote, a pallet, a tray or similar. Different types of goods holders may be used in the same automated storage and retrieval system.

The relative terms "upper", "lower", "below", "above", "higher" etc. shall be understood in their normal sense and as seen in a Cartesian coordinate system. When mentioned in relation to a rail system, "upper" or "above" shall be understood as a position closer to the surface rail system (relative to another component), contrary to the terms "lower" or "below" which shall be understood as a position further away from the rail system (relative another component).

### BRIEF DESCRIPTION OF THE DRAWINGS

Following drawings are appended to facilitate the understanding of the invention. The drawings show embodiments of the invention, which will now be described by way of example only, where:
Fig. 1 is a perspective view of a framework structure of a prior art automated storage and retrieval system.
Fig. 2 is a perspective view of a prior art container handling vehicle having a centrally arranged cavity for carrying storage containers therein.
Fig. 3a is a perspective view of a prior art container handling vehicle having a cantilever for carrying storage containers underneath.
Fig. 3b is a perspective view, seen from below, of a prior art container handling vehicle having an internally arranged cavity for carrying storage containers therein.
Fig. 4 is a perspective view of a plurality of mutually parallel rows of floor rails. Perpendicular to these floor rails, spacing elements are provided.
Fig. 5a shows a perspective view of a section of a floor rail in accordance with one embodiment of the present invention.
Fig. 5b is a close-up view of a section of a floor rail shown in Fig. 5a.
Fig. 6 is a perspective view showing floor rails, a leveling foot and a section of a thereto associated upright member.
Fig. 7a is an exploded view of a threaded elongate member, a threaded nut for engagement with the threaded member and a base member.
Fig. 7b is a connected view of the members of Fig. 7a.
Fig. 7c shows an alternative embodiment of a threaded elongate member and a base member.
Fig. 8a is close-up of an entire inventive assembly in accordance with one embodiment of the present invention.
Fig. 8b is close-up of the inventive assembly of Fig. 8a, where the elongate member and the nut member are in engagement with the floor rail.
Fig. 9 is a cross-sectional view of the inventive assembly shown in Fig. 8b.

### DETAILED DESCRIPTION OF THE INVENTION

In the following, embodiments of the invention will be discussed in more detail with reference to the appended drawings. It should be understood, however, that the drawings are not intended to limit the invention to the subject-matter depicted in the drawings.

The framework structure 100 of the automated storage and retrieval system 1 is constructed in accordance with the prior art framework structure 100 described above in connection with Figs. 1-3b, i.e. a number of upright members 102, wherein the framework structure 100 also comprises a first, upper rail system 108 in the X direction and Y direction.

The framework structure 100 further comprises storage compartments in the form of storage columns 105 provided between the members 102 where storage containers 106 are stackable in stacks 107 within the storage columns 105.

The framework structure 100 can be of any size. In particular, it is understood that the framework structure can be considerably wider and/or longer and/or deeper than disclosed in Fig. 1. For example, the framework structure 100 may have a horizontal extent of more than 700x700 columns and a storage depth of more than twelve containers.

Various aspects of the present invention will now be discussed in more detail with reference to Figs. 4-9.

Fig. 4 is a perspective view of a plurality of mutually parallel rows of floor rails 16. Perpendicular to these floor rails 16, cross-members 17 serving as spacing elements are provided. The floor rails 16 extend in a first direction and the cross-members 17 extend in a second direction perpendicular to the first direction. The cross-members 17 cross over the floor rails 16 at cross-over points 19 to define a lattice structure that is to serve as the foundation for the framework structure shown in Fig. 1.

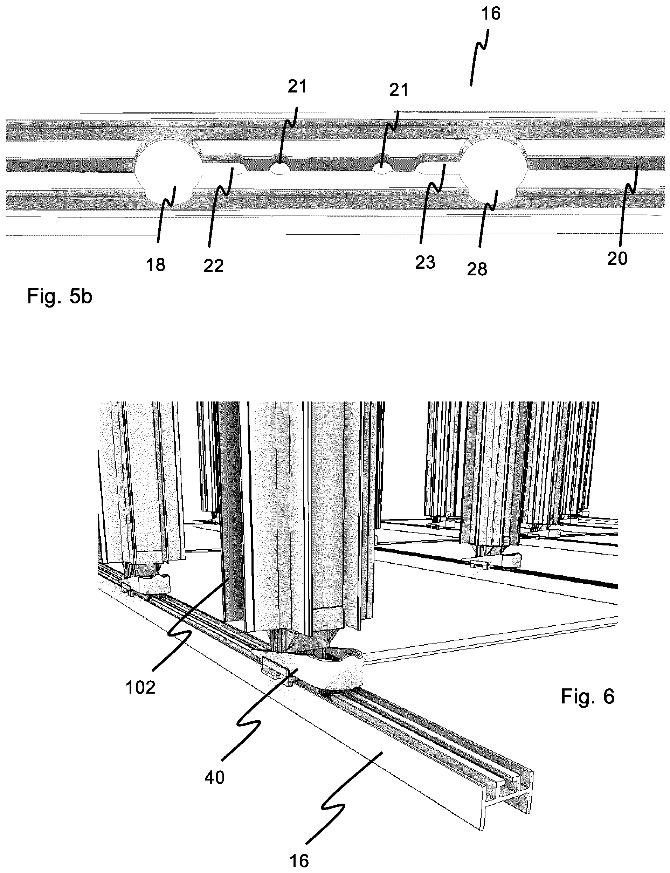

Fig. 5a shows a perspective view of a section of an exemplary floor rail 16 in accordance with one embodiment of the present invention. Shown floor rail 16 has apertures 18, 28 and a longitudinally extending T-shaped slot 20 on its upper face, the T-shaped slot 20 communicating with at least one of the apertures 18, 28. Apertures 18, 28 delimit a central section 30 of the floor rail 16. It is in the delimited section an upright member (102; shown in Fig. 1) is connected to the floor rail 16 by means of a levelling foot of the type discussed in Background and Prior Art-section (shown in Fig. 6). The foot and the upright member are arranged midway between the first 18 and the second 28 apertures.

Fig. 5b is a close-up view of a section of a floor rail shown in Fig. 5a. In addition to apertures 18, 28, the floor rail 16 has further holes 21 for mounting the levelling foot mentioned above. The floor rail 16 of Fig. 5a further comprises a first 22 and a second recess 23 communicating with the respective aperture 18, 28 and with the T-shaped slot 20. The first 22 and the second 23 recesses extend in a direction of extension of the T-shaped slot 20, are aligned and oppositely arranged.

Fig. 6 is a perspective view showing a floor rail 16 of the type discussed in connection with Figs. 4-5, a leveling foot 40 and a section of a thereto associated upright member 102.

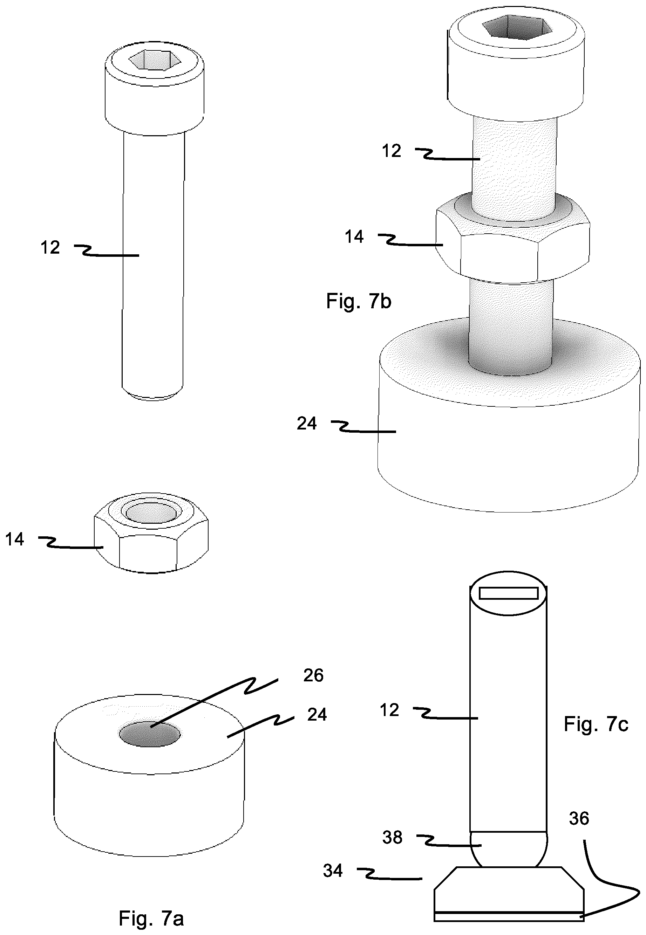

Fig. 7a is an exploded view of a threaded elongate member 12, a threaded nut 14 for engagement with the threaded member and a base member 24. In the shown embodiment, the threaded elongate member 12 is a bolt having a socket cap head. In an alternative embodiment, such a bolt could have a conventional hex head.

Accordingly, the adjustment may be effected by means of conventional tools, such as a wrench, a screwdriver or a hex key.

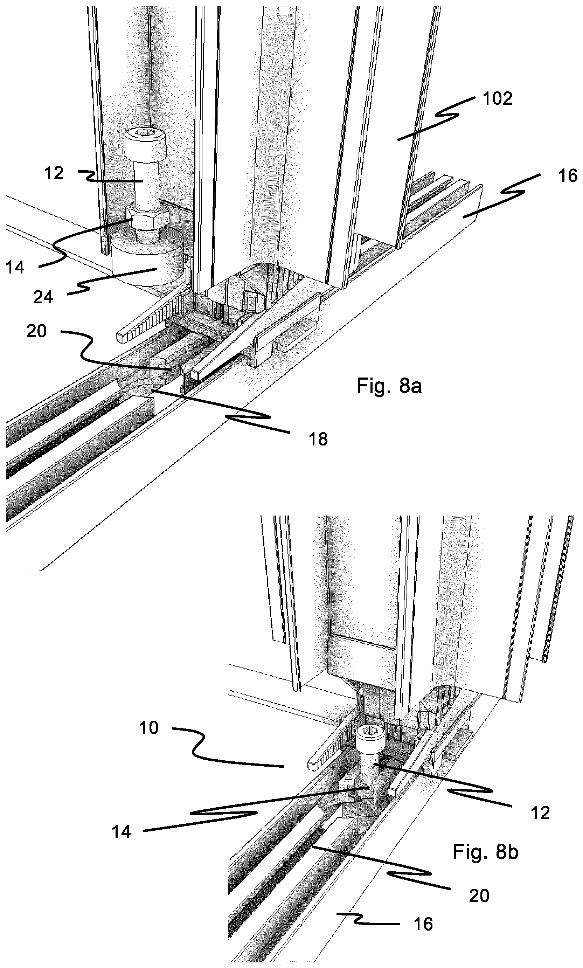

Still with reference to Fig. 7a, the base member 24 is detachable and provided with a hole 26 for receiving the threaded elongate member 12. The hole 26 of the base element 24 could be at least partially threaded. As will be shown in connection with Fig. 8b, in use, the base member 24 is positioned on the floor surface, in a cavity delimited by the walls of the floor rail 16 and the floor.

Fig. 7b is a connected view of the members of Fig. 7a, ready to be deployed, i.e. brought in engagement with the floor rail. This will be discussed in greater detail in connection with Figs. 8a-8b.

In an alternative embodiment, shown in Fig. 7c, base member is a foot member 34 connected to an end of the threaded elongate member 12. The threaded elongate member 12 lacks a conventional head and is actuated by means of a screwdriver. The foot member 34 could be compressible in a vertical direction, for instance by making lowermost portion 36 of the foot in a polymer material, such as rubber. This would also improve friction properties of the foot member 34. In one embodiment, connection means between the threaded elongate member 12 and the foot member 34 is a ball joint 38. In this way, the foot member 34 may accommodate local unevenness, for instance slanting, of the floor surface. A threaded nut of Figs. 7a-7b may be employed with the threaded elongate member/foot member of Fig. 7c.

Fig. 8a is close-up of an entire inventive assembly prior to engagement, whereas Fig. 8b is close-up of the inventive assembly of Fig. 8a, where the elongate member 12 and the nut member 14 are in engagement with the floor rail 16.

Accordingly, it is shown in Fig. 8a a levelling assembly for a framework structure of a storage grid of a storage and retrieval system for storing goods holders. In other words, the assembly provides a flat and even surface for operation of remotely operated vehicles shown in Figs 1-3b. The framework structure is positioned on a floor surface. The levelling assembly comprises previously discussed components - a threaded elongate member 12, a threaded nut 14 for engaging with the threaded elongate member 12, and a floor rail 16 for supporting upright members 102 of the storage and retrieval system 1. As discussed above, the floor rail 16 is provided with a first aperture 18 for mounting the threaded elongate member 12 in a location on the floor rail 16 where the member 12 can extend through and be coupled to said floor rail 16. The floor rail is provided with a channel 20, typically a T-shaped slot, for receiving the threaded nut 14 and extending from the aperture 18 in a longitudinal direction of the floor rail. A base member 24 ensuring floor contact of the threaded elongate member 12 is also shown.

Still with reference to Fig. 8a, the threaded elongate member 12 is engaged with the threaded nut 14 and these are subsequently inserted into the first aperture 18 arranged in said floor rail 16. Thereafter, the threaded nut 14 is arranged in the channel 20 extending from the aperture 18 in a longitudinal direction of the floor rail 16 by sliding the threaded elongate element 12 engaged with the threaded nut 14 into the channel 20 of the floor rail 16 so that the threaded nut 14 is rotationally immobilized relative the channel 20.

Turning now to Fig. 8b, in a first state of the levelling assembly 10, the threaded elongate member 12 is in contact with the floor surface, via the base member, and engages with the threaded nut 14 that is received in the channel 20. The threaded nut 14 is dimensioned to fit tightly in the channel 20 and is rotationally immobilized relative said channel 20 so that, in response to a rotational force applied on the threaded elongate member 12, the floor rail 16 is movable in vertical direction, i.e. it may be raised and lowered.

By providing the levelling assembly 10 as defined above, a simple and cost-efficient solution for taking up irregularities in the floor surface is obtained. This also means that no specific training is necessary for the workers assigned to this particular moment of the system installation. In addition, the proposed solution is well-suited in situations where a large amount of units needs to be adjusted in a short time period.

In addition, use of interacting threaded elements 12, 14 permits fine adjustments of the levelling assembly 10, i.e. adjustments in very small increments. This is particularly useful in situations requiring continuous adjustment of the levelling assembly 10.

In an embodiment, the levelling assembly 10 is locked in an adjusted position (second state of the levelling assembly) by immobilizing the threaded elongate member 12 in vertical direction by means of a locknut (not shown) engaging with the threaded elongate member 12 and abutting against the floor rail 16.

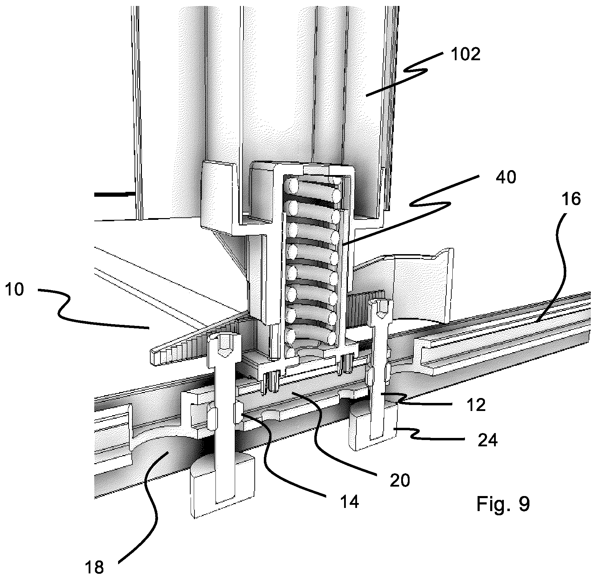

Fig. 9 is a cross-sectional view with the inventive assembly 10 shown in Fig. 8b. The solution includes two levelling assemblies 10, one on each side of the upright member 102. For the sake of intelligibility and completeness, parts of the levelling assembly 10 are provided with reference numerals corresponding to those employed in connection with Figs. 4-8b. The levelling foot 40 is also shown.

As easily inferred from above, the proposed solution may easily be implemented during installation of the storage and retrieval system 1. In a related context, the solution is compatible with the existing design of the storage and retrieval system for storing goods holders such that it is possible, subject to structural modifications, to retrofit the claimed levelling assembly 10 on existing systems.

The following clauses describe the developments mentioned above from another aspect, to serve as basis for future divisional applications or amendments.
1. An adjustable foundation for supporting a framework structure of a storage grid of an automated storage and retrieval system on a floor surface, the framework structure providing storage columns for storing goods holders and for supporting remotely operated vehicles on a rail system at an upper level of the framework structure to handle said goods holders in use, said adjustable foundation comprising:
   - a plurality of floor rails extending in a first direction;
   - a plurality of cross-members extending in a second direction perpendicular to the first direction, the cross-members crossing over the floor rails at cross-over points to define a lattice structure that is to serve as the foundation for the framework structure; and
   - a plurality of adjustable elements, each of which is positioned in one of the floor rails adjacent to one of the cross-over points, and each being individually extendable from a lower surface of the floor rail into contact with the floor surface below to lift and/or support the adjustable foundation with respect to the underlying floor surface in order to adjust a level of the adjustable foundation at the cross-over points.
2. An adjustable foundation as described in clause 1, wherein each adjustable element comprises a threaded elongate member which engages a threaded hole provided in, or on, one of the floor rails, wherein rotation of the threaded member is able to urge an end section of the adjustable element against the floor surface, to support and/or lift the adjustable foundation relative to the floor surface.
3. An adjustable foundation as described in clause 2, wherein each floor rail is provided with a plurality of apertures, the apertures extending from an upper surface of the floor rail to the lower surface, and each aperture being sized to receive the end section of an adjustable element therein, and optionally therethrough.
4. An adjustable foundation as described in clause 3, wherein each aperture is positioned within 200 mm of a cross-over point, and each adjustable element is positioned between the aperture and the cross-over point.
5. An adjustable foundation as described in clause 3 or 4, wherein a pair of the apertures are provided for each cross-over point, one on each side of the cross-over point.
6. An adjustable foundation as described in clause 3, 4 or 5, wherein each adjustable element is fitted to its respective floor rail by being inserted, at least in part, through one of the apertures and slid in a longitudinal direction of the floor rail into engagement with a channel provided in the floor rail.
7. An adjustable foundation as described in clause 6, wherein a nut engaged by the threaded elongate member provides the threaded hole for the elongate member, the nut being received by the channel of the floor rail that restricts rotation of the nut.
8. An adjustable foundation as described in clause 6 or 7, wherein for each aperture a slot is provided in an upper and lower surface of the channel, each slot extending from the aperture towards the cross-over point to allow horizontal positioning of the adjustable element with respect to the floor rail.
9. An adjustable foundation as described in any preceding clause, wherein the adjustable element is positioned in a location within 150 mm from a respective cross-over point in order to be adjacent the cross-over point.
10. An adjustable foundation as described in any preceding clause, wherein an adjustable mount is provided at each cross-over point to receive an upright member of the framework structure.
11. An adjustable foundation as described in clause 10, wherein each adjustable mount comprises a levelling foot for supporting the respective upright member of the framework structure.
12. An adjustable foundation as described in clause 11, wherein further adjustable mounts are positioned at points midway between the cross-over points on each floor rail, the further adjustable mounts being provided to receive additional upright members of the framework structure, wherein additional pairs of adjustable elements are provided in the floor rails, each of the additional adjustable elements being mounted on opposite sides of each further adjustable mount to provide lift and/or support to a region of a respective floor rail midway between the respective cross-over points.
13. A method of constructing an adjustable foundation for supporting a framework structure of a storage grid of an automated storage and retrieval system on a floor surface, the framework structure providing storage columns for storing goods holders and for supporting remotely operated vehicles on a rail system at an upper level of the framework structure to handle said goods holders in use, said method comprising:
   - laying a plurality of floor rails on the floor surface, the plurality of floor rails extending in a first direction;
   - laying a plurality of cross-members over the floor rails, the plurality of cross-members extending in a second direction perpendicular to the first direction such that the cross-members cross over the floor rails at cross-over points to define a lattice structure that is to serve as the foundation for the framework structure; and
   - setting a height of a plurality of adjustable elements, each of which is positioned in one of the floor rails adjacent to one of the cross-over points, and each being individually extendable from a lower surface of the floor rail into contact with the floor surface below to lift and/or support the adjustable foundation with respect to the underlying floor surface in order to adjust a level of the adjustable foundation at the cross-over points.
14. A method as described in clause 13, wherein each adjustable foot comprises a threaded elongate member which engages a threaded hole provided in, or on, one of the floor rails, wherein the threaded member is rotated to urge a base of the adjustable element against the floor surface, to support and/or lift the adjustable foundation relative to the floor surface.
15. A method as described in clause 14, wherein each floor rail is provided with a plurality of apertures, the apertures extending from an upper surface of the floor rail to the lower surface, and each aperture being sized to receive an end section of an adjustable element therein, and wherein the method includes inserting the adjustable element into the apertures, optionally passing them therethrough.
16. A method as described in clause 15, wherein each adjustable element is fitted to its respective floor rail by being inserted, at least in part, through one of the apertures and slid in a longitudinal direction of the floor rail into engagement with a channel provided in the floor rail.
17. A method as described in clause 16, wherein a nut engaged by the threaded elongate member provides the threaded hole for the elongate member, and the nut is received by the channel of the floor rail as it is slid into engagement with the channel to restrict rotation of the nut.
18. A method as described in clause 16 or 17, wherein for each aperture a slot is provided in an upper and lower surface of the channel, each slot extending from the aperture towards the cross-over point, and the method including horizontal positioning of the adjustable element with respect to the floor rail into a location within 150mm from a respective cross-over point in order to be adjacent the cross-over point.
19. A method as described in any of clauses 13 to 18, wherein an adjustable mount is mounted to the adjustable foundation at each cross-over point to receive an upright member of the framework structure.
20. A method as described in clause 19, wherein further adjustable mounts are mounted to the adjustable foundation at points midway between the cross-over points on each floor rail, the further adjustable mounts being provided to receive additional upright members of the framework structure, wherein additional pairs of adjustable elements are provided in the floor rails, each of the additional adjustable elements being mounted on opposite sides of each further adjustable mount to provide lift and/or support to a region of a respective floor rail midway between the respective cross-over points, the method including setting the height of the additional pairs of adjustable element in order to adjust a level of the adjustable foundation at the points midway between the cross-over points.

In the preceding description, various aspects of the levelling assembly for a storage and retrieval system for storing goods holders according to the invention have been described with reference to the illustrative embodiment. For purposes of explanation, specific numbers, systems and configurations were set forth in order to provide a thorough understanding of the system and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention.

### LIST OF REFERENCE NUMBERS

- 1: Storage and retrieval system
- 10: Levelling assembly
- 12: Threaded elongate element
- 14: Threaded nut
- 16: Floor rail
- 17: Cross-member
- 18: First aperture
- 19: Cross-over point
- 20: Channel/T-shaped slot
- 21: Further holes
- 22: First recess
- 23: Second recess
- 24: Base member
- 26: Hole of the base member
- 28: Second aperture
- 30: Central section
- 34: Foot member
- 36: Lowermost portion of the foot
- 38: Ball joint
- 40: Levelling foot
- 100: Framework structure
- 102: Upright members of framework structure
- 104: Storage grid
- 105: Storage column
- 106: Storage container/goods holder
- 106': Particular position of storage container
- 107: Stack of storage containers
- 108: Rail system
- 110: Parallel rails in first direction (X)
- 111: Parallel rails in second direction (Y)
- 112: Access opening
- 119: First port column
- 201: Container handling vehicle belonging to prior art
- 201a: Vehicle body of the container handling vehicle 201
- 201b: Drive means / wheel arrangement, first direction (X)
- 201c: Drive means / wheel arrangement, second direction (Y)
- 301: Cantilever-based container handling vehicle belonging to prior art
- 301a: Vehicle body of the container handling vehicle 301
- 301b: Drive means in first direction (X)
- 301c: Drive means in second direction (Y)
- 401: Container handling vehicle belonging to prior art
- 401a: Vehicle body of the container handling vehicle 401
- 401b: Drive means in first direction (X)
- 401c: Drive means in second direction (Y)
- X: First direction
- Y: Second direction
- Z: Third direction

The disclosure comprises the following clauses:
1. A levelling assembly (10) for a framework structure of a storage grid of a storage and retrieval system (1) for storing goods holders (106), said framework structure being positioned on a floor surface, said levelling assembly (10) comprising:
   - a threaded elongate member (12),
   - a threaded nut (14) for engaging with the threaded elongate member (12),
   - a floor rail (16) for supporting upright members (102) of the storage and retrieval system (1), wherein the floor rail (16) is provided with a first aperture (18) for mounting the threaded elongate member (12) in a location on the floor rail where the member (12) can extend through and be coupled to said floor rail (16), wherein the floor rail is provided with a channel (20) for receiving the threaded nut (14) and extending from the aperture (18) in a longitudinal direction of the floor rail (16), wherein
   in a first state of the levelling assembly (10), the threaded elongate member (12) is in contact with the floor surface and engages with the threaded nut (14) that is received in the channel (20) and rotationally immobilized relative said channel (20) so that, in response to a rotational force applied on the threaded elongate member (12), the floor rail (16) is movable in vertical direction.
2. A levelling assembly (10) of clause 1, wherein the channel (20) comprises a T-shaped slot (20) on an upper face of the floor rail (16), the T-shaped slot (20) communicating with the first aperture (18).
3. A levelling assembly (10) of any of the preceding clauses, wherein the threaded elongate member (12) is a bolt having a hex head and/or a socket cap head.
4. A levelling assembly (10) of any of the preceding clauses, wherein the levelling assembly (10) further comprises a detachable base member (24) having a hole (26) for receiving the threaded elongate member (12).
5. A levelling assembly (10) of clause 5, wherein the hole (26) of the base member (24) is at least partially threaded.
6. A levelling assembly (10) of any of the clauses 1-3, wherein the levelling assembly (10) further comprises a foot member (34) connected to an end of the threaded elongate member (12).
7. A levelling assembly (10) of clause 6, wherein the foot member (34) is compressible in vertical direction.
8. A levelling assembly (10) of claim 6 or claim 7, wherein the connection means between threaded elongate member (12) and the foot member (34) is a ball joint.
9. A levelling assembly (10) of any of the preceding clauses, wherein a second aperture (28) is arranged in said floor rail (16), wherein the first (18) and the second (28) apertures delimit a central section (30) of the floor rail (16) and wherein an upright member (102) is attached to the central section (30) of the floor rail (16), said upright member (102) being arranged midway between the first (18) and the second (28) apertures.
10. A levelling assembly (10) of any of the preceding clauses, wherein, in a second state of the levelling assembly (10), the threaded elongate member (12) is immobilized.
11. A levelling assembly (10) of clause 10, wherein the threaded elongate member (12) is immobilized in vertical direction by means of a locknut engaging with the threaded elongate member (12) and abutting against the floor rail (16).
12. A levelling assembly (10) of any of the preceding clauses,wherein the threaded nut (14) is dimensioned to fit tightly in the channel (20).
13. A method for taking up irregularities in a floor surface supporting a storage and retrieval system (1) for storing goods holders (106) by means of a levelling assembly comprising a threaded elongate member (12), a threaded nut (14) for engaging with the threaded elongate member (12) and a floor rail (16) provided on said floor surface and for supporting upright members (102) of the storage and retrieval system (1), the method comprising:
   - inserting the threaded elongate member (12) engaged with the threaded nut (14) into a first aperture (18) arranged in said floor rail (16),
   - arranging the threaded nut (14) in a channel (20) extending from the aperture (18) in a longitudinal direction of the floor rail (16) by sliding the threaded elongate element (12) engaged with the threaded nut (14) into a channel (20) of the floor rail (16) so that the threaded nut (14) is rotationally immobilized relative the channel (20), and
   - applying a rotational force so that the threaded elongate member (12) rotates and the floor rail (16) moves in vertical direction.
14. A method of clause 13, comprising:
   - immobilizing the threaded elongate member (12).

## Claims

1. A levelling assembly (10) for a framework structure of a storage grid of a storage and retrieval system (1) for storing goods holders (106), the levelling assembly (10) comprising:
- a threaded elongate member (12);
- a threaded nut (14) for engaging with the threaded elongate member (12); and
- a floor rail (16) for supporting upright members (102) of the storage and retrieval system (1), wherein the floor rail (16) is provided with a first aperture (18) for mounting the threaded elongate member (12) in a location on the floor rail where the member (12) can extend through, wherein the floor rail is provided with a channel (20) for receiving the threaded nut (14), wherein the channel extends from the aperture (18) in a longitudinal direction of the floor rail (16), wherein,
in a first state of the levelling assembly (10):
the threaded elongate member (12) is in contact with a floor surface and is engaged with the threaded nut (14);
the threaded nut (14) is received in the channel (20); and
the threaded nut (14) is rotationally immobilized relative to the channel (20) so that, in response to a rotational force applied on the threaded elongate member (12), the floor rail (16) is movable in a vertical direction.

2. A levelling assembly (10) of claim 1, wherein the channel (20) comprises a T-shaped slot (20) on an upper face of the floor rail (16), the T-shaped slot (20) communicating with the first aperture (18).

3. A levelling assembly (10) of any of the preceding claims, wherein the threaded elongate member (12) is a bolt having a hex head and/or a socket cap head.

4. A levelling assembly (10) of any of the preceding claims, wherein the levelling assembly (10) further comprises a detachable base member (24) having a hole (26) for receiving the threaded elongate member (12).

5. A levelling assembly (10) of claim 5, wherein the hole (26) of the base member (24) is at least partially threaded.

6. A levelling assembly (10) of any of the claims 1-3, wherein the levelling assembly (10) further comprises a foot member (34) connected to an end of the threaded elongate member (12).

7. A levelling assembly (10) of claim 6, wherein the foot member (34) is compressible in a vertical direction.

8. A levelling assembly (10) of claim 6 or claim 7, wherein the connection means between threaded elongate member (12) and the foot member (34) is a ball joint.

9. A levelling assembly (10) of any of the preceding claims, wherein a second aperture (28) is arranged in the floor rail (16), wherein the first (18) and the second (28) apertures delimit a central section (30) of the floor rail (16) and wherein an upright member (102) is attached to the central section (30) of the floor rail (16), the upright member (102) being arranged midway between the first (18) and the second (28) apertures.

10. A levelling assembly (10) of any of the preceding claims, wherein, in a second state of the levelling assembly (10), the threaded elongate member (12) is immobilized.

11. A levelling assembly (10) of claim 10, wherein the threaded elongate member (12) is immobilized in a vertical direction by means of a locknut engaging with the threaded elongate member (12) and abutting against the floor rail (16).

12. A levelling assembly (10) of any of the preceding claims, wherein
the threaded nut (14) is dimensioned to fit tightly in the channel (20).

13. A method, using a levelling assembly, for taking up irregularities in a floor surface supporting a storage and retrieval system (1) for storing goods holders (106), the levelling assembly comprising a threaded elongate member (12), a threaded nut (14) for engaging with the threaded elongate member (12) and a floor rail (16) for supporting upright members (102) of the storage and retrieval system (1), the method comprising:
- inserting the threaded elongate member (12) engaged with the threaded nut (14) into a first aperture (18) arranged in the floor rail (16);
- arranging the threaded nut (14) in a channel (20) extending from the aperture (18) in a longitudinal direction of the floor rail (16) by sliding the threaded elongate element (12) engaged with the threaded nut (14) into a channel (20) of the floor rail (16) so that the threaded nut (14) is rotationally immobilized relative to the channel (20); and
- applying a rotational force so that the threaded elongate member (12) rotates and the floor rail (16) moves in a vertical direction.

14. A method of claim 13, comprising:
- immobilizing the threaded elongate member (12).
